Europäisches Patentamt

European Patent Office

Office européen des brevets

(19)

(11) Veröffentlichungsnummer : **0 113 041**
**B1**

(12)   **EUROPÄISCHE PATENTSCHRIFT**

(45) Veröffentlichungstag der Patentschrift :
**08.07.87**

(21) Anmeldenummer : **83111824.5**

(22) Anmeldetag : **25.11.83**

(51) Int. Cl.⁴ : **B 29 C 47/70**

(54) **Verfahren und Vorrichtung zur Bildung und Umschichtung von Teilströmen von aus bzw. in einer Strangpresse geförderten thermoplastischen und/oder elastomeren Massen.**

(30) Priorität : **06.12.82 DE 3245084**
**11.05.83 DE 3317347**

(43) Veröffentlichungstag der Anmeldung :
**11.07.84 Patentblatt 84/28**

(45) Bekanntmachung des Hinweises auf die Patenterteilung : **08.07.87 Patentblatt 87/28**

(84) Benannte Vertragsstaaten :
**CH DE FR GB IT LI**

(56) Entgegenhaltungen :
**CH-A-  486 300**
**DE-A- 1 629 734**
**DE-A- 2 006 941**
**DE-A- 2 327 540**
**DE-B- 2 023 910**
**US-A- 3 018 807**
**US-A- 3 146 495**

(73) Patentinhaber : **Windmöller & Hölscher**
**Münsterstrasse 48-52**
**D-4540 Lengerich i.W. (DE)**

(72) Erfinder : **Upmeier, Hartmut, Dipl.-Ing.**
**Jahnstrasse 25**
**D-4540 Lengerich (DE)**

(74) Vertreter : **Lorenz, Eduard et al**
**Rechtsanwälte Lorenz, Eduard - Seidler, Bernhard Seidler, Margrit - Gossel, Hans-K. Philipps, Ina, Dr. Widenmayerstrasse 23**
**D-8000 München 22 (DE)**

**Beschreibung**

Die Erfindung betrifft ein Verfahren zur Bildung und Umschichtung von Teilströmen von aus bzw. in einer Strangpresse geförderten thermoplastischen und/oder elastomeren Massen, bei dem der Schmelzestrom in sektorartige Teilströme aufgeteilt und diese in relativ zueinander versetzter Form wieder zusammengeführt werden, sowie eine Vorrichtung zur Durchführung dieses Verfahrens.

Ein derartiges Verfahren ist aus der DE-AS 2 023 910 bekannt. Bei der Verarbeitung elastomerer oder thermoplastischer Massen treten im Anschluß an die eigentliche Strangpresse in den Fließkanälen zum ausformenden Werkzeug bzw. in den Verteilerkanälen im Spritzwerkzeug selbst Inhomogenitäten bezüglich Massetemperatur und Viskositäten auf. Ein besonderes Problem ergibt sich aus den in den Verteilerkanälen sich bildenden Grenzschichten, die sich aufgrund des an den Kanalwänden haftenden und langsamer fließenden Materials ausbilden, das sich durch die längere Verweilzeit in seiner Viskosität und wegen Fortschreitens seines chemischen Abbaus gegenüber dem im Bereich des Zentrums des Kanals strömenden frischeren Materials verändert. Die Temperaturverteilung in dem Verteilerkanal in einiger Entfernung hinter der Strangpresse weist in der Regel im Strömungszentrum eine Temperaturspitze bis zu 20° über der mittleren Temperatur auf. Der in der Regel hochviskose Schmelzestrang gleitet auf den wandnahen Schichten und erfährt dort durch Wandscherung eine zusätzliche Wärmeentwicklung mit Erhöhung der Schmelzetemperatur und sich daraus ergebender Erniedrigung der Schmelzeviskosität. Diese wandnahen Schichten bilden die unerwünschten Grenzschichten, die sich insbesondere bei eingefärbten Schmelzen nach einem Farbwechsel als störende Grenzschichtmarkierungen in dem fertigen Produkt bemerkbar machen.

Es sind bereits zahlreiche Vorrichtungen zur Beseitigung der in der aus der Strangpresse austretenden Schmelze vorhandenen Inhomogenitäten bekannt geworden. Mit den Förderschnecken der Strangpresse rotierende Mischwerkzeuge, wie sie beispielsweise aus der US-PS 2 631 016 und der DE-PS 1 197 438 bekannt sind, haben nicht zu befriedigenden Ergebnissen geführt. Bessere Ergebnisse wurden durch die Aufteilung des aus der Strangpresse austretenden strangförmigen Schmelzestroms in Teilströme erreicht, die anschließend in relativ zueinander versetzter Form wieder zusammengeführt wurden. Derartige Vorrichtungen sind beispielsweise aus der CH-PS 486 300, der DE-PS 1 926 488, der DE-AS 1 956 652 sowie der DE-AS 2 129 971 bekannt. Diese bekannten Vorrichtungen ermöglichten es jedoch nur, Teile der Grenzschichten umzuschichten und zu verlagern, so daß andere Teile der Grenzschichten erhalten blieben und als Grenzschichtmarkierungen in Streifenform noch immer in Erscheinung traten.

Eine gute Mischwirkung wurde durch ein Paket aus jeweils um 90° zueinander gedrehten Platten mit wellblechförmigen Oberflächen erzielt, das in dem Schmelzestrom angeordnet wurde. Die Wellen bildeten jedoch viele sogenannte Totecken, so daß sich ein sehr ungünstiges Anfahrverhalten ergab, weil nach dem Aufheizen über mehrere Stunden ein Freispülprozeß von vernetzten Materialpartikeln erfolgen mußte. Die aus der DE-AS 2 023 910 bekannte ringförmige Verteilerscheibe weist abwechselnd einander kreuzende, radial nach außen und radial nach innen geneigte Durchtrittskanäle auf, so daß die Ein- und Austrittskanäle auf der Anström- und der Ausströmseite auf zueinander konzentrischen Ringbereichen liegen und nur eine Umschichtung der durch die Kanäle strömenden Schmelzestränge von innen nach außen und umgekehrt erfolgt. Durch diese Umschichtung gelangen zwei Grenzschichten nach innen, die durch die nächstfolgende Verteilerscheibe wieder in ihre ursprüngliche Lage nach innen und außen zurückgeführt werden, so daß durch die Hintereinanderschaltung mehrerer Verteilerscheiben grundsätzlich keine bessere Verteilung erreicht werden kann.

Aufgabe der Erfindung ist es daher, die Homogenisierung der Schmelze in dem Verteilerkanal hinter der Strangpresse bzw. in dieser zu verbessern, so daß die störenden Einflüsse der Grenzschicht vermieden oder zumindest wesentlich verringert werden.

Erfindungsgemäß wird diese Aufgabe bei einem Verfahren der eingangs angegebenen Art durch die kennzeichnenden Merkmale des Patentanspruchs 1 gelöst. Nach dem erfindungsgemäßen Verfahren wird die Grenzschicht in Streifen aufgeteilt, von denen jeweils ein Streifen mit dem zugehörigen Sektor nach innen geleitet wird, so daß sich die Grenzschichtstreifen nach dem Zusammenführen der Teilströme wieder über den ganzen Umfang ausdehnen und sich aus den äußeren Grenzschichtstreifen eine Grenzschicht der halben Stärke ausbildet, weil die nun aneinandergrenzenden Grenzschichtsstreifen um ihre doppelte Umfangslänge gestreckt worden sind, und sich aus den nach innen verlagerten Grenzschichtstreifen eine im mittleren Bereich des Schmelzestromes befindliche Grenzschicht bildet. Zweckmäßigerweise wird der Schmelzestrom mehrmals aufgeteilt und die Teilströme werden in der beschriebenen Weise wieder vereinigt, so daß die Grenzschichten des zugeführten Massestranges in entsprechend verdünnten konzentrischen Ringschichten einander überlagert werden. Eine erfindungsgemäße Verteilung ergibt also zwei Schichten, zwei Verteilungen vier Schichten, drei Verteilungen acht einander überlagerte Schichten und n-Verteilungen $2^n$ einander überlagerte Schichten. Die Schichten sind nicht mehr in Streifenform, sondern in gestreckter, einander überlagerter Form vorhanden, so daß eine gute Homogenisierung erzielt wird und störende Grenzschichtmarkierungen nicht mehr in Erscheinung treten.

Eine Vorrichtung bestehend aus wenigstens einer ringförmigen Verteilerscheibe zur Durchführung des Verfahrens nach Anspruch 1 mit winkelig zueinander verlaufenden und den Schmelzestrom in Teilströme aufteilenden und diese in relativ zueinander versetzter Form wieder zusammenführenden, abwechselnd radial nach außen und innen verlaufenden Kanälen zeichnet sich durch die kennzeichnenden Merkmale des Patentanspruchs 3 aus.

Um die Grenzschicht in mehreren konzentrischen Schichten zu ihrer Verdünnung umzuschichten, ist in weiterer Ausgestaltung der Erfindung ein aus mindestens zwei ringförmigen Verteilerscheiben bestehender Verteilerblock vorgesehen, wobei zwischen jeweils zwei Scheiben ein ringförmiger Kanal gebildet ist, dessen Einlaufspaltbreite der Breite des durch die auf etwa konzentrischen Reihen angeordneten Öffnungen der Bohrungen auf der Abströmseite definierten ringförmigen Bereiches entspricht und der sich konvergierend auf eine Breite verengt, die der Breite des durch die Öffnungen der Bohrungen auf der Anströmseite bestimmten ringförmigen Bereiches angepaßt ist. Bei dieser Ausgestaltung werden die durch die jeweils vorhergehende ringförmige Verteilerscheibe nach außen und innen geleiteten Teilströme durch den konvergierenden Kanal wieder in der Weise zusammengeführt, daß sie zur erneuten Verteilung in die Einlauföffnungen der folgenden ringförmigen Verteilerscheibe einlaufen können.

In erfinderischer Weiterbildung ist vorgesehen, daß jeder Einlauf- und Auslauföffnung der Kanäle sich trichterförmig verengende bzw. erweiternde Bereiche zugeordnet sind, die durch in Fließschneiden auslaufende steg- oder wulstförmige Zwischenwandteile von angrenzenden Bereichen getrennt sind. Auf diese Weise wird angenähert eine Aufteilung des ringförmigen Schmelzestroms in sektorförmige Teile und anschließend eine Zusammenfügung der sektorförmigen Teile in gestreckter bzw. aneinandergrenzender Form auf zwei konzentrischen Ringen erreicht.

Die erfindungsgemäße Verteilerscheibe kann auf ihrer Anströmseite eine zu ihrer Achse konzentrische, im Querschnitt etwa V-förmige Ringnut aufweisen, von deren Grund die abwechselnd radial nach außen und radial nach innen verlaufenden Kanäle ausgehen, die auf der Abströmseite auf zueinander konzentrischen Ringbereichen der Verteilerscheibe münden. Diese Ausgestaltung der Verteilerscheibe gestattet es, diese zur Mehrfachverteilung unmittelbar hintereinander zu schalten. Dabei entspricht zweckmäßigerweise der äußere Durchmesser der V-förmigen Nut der Breite der Ringbereiche in dem die Kanäle auf der Abströmseite münden.

Die erfindungsgemäße Verteilerscheibe bzw. aus diesen zusammengesetzte Verteilerblöcke können stationär in einem Schmelzekanal, beispielsweise in dem Schmelzekanal zwischen der Strangpresse und dem ausformenden Spritzwerkzeug unmittelbar vor eine Schmelzekanalverzweigung angeordnet werden. Sie können aber auch auf dem Schaft der Förderschnecke einer Strangpresse befestigt werden, um bereits in dem Extruder eine Verbesserung der Durchmischung unter Beseitigung störender Grenzschichten zu bewirken.

Nach dem erfindungsgemäßen Verfahren sowie der erfindungsgemäßen Vorrichtung werden die Grenzschichtfehler so weitflächig übereinandergeschichtet, daß sich der Einfluß der einzelnen Schichten störend nicht mehr bemerkbar macht.

Ein Ausführungsbeispiel der Erfindung wird nachstehend anhand der Zeichnung näher erläutert. In dieser zeigt

Figur 1 einen Längsschnitt durch eine radialsymmetrische Verteilerscheibe,

Figuren 2 und 3 Ansichten der Verteilerscheibe nach Fig. 1 in Richtung der Pfeile II und III,

Figur 4 eine Doppelkegel-Schnittführung entlang den Schnittlinien A — B und C — D in Fig. 1, wobei die Kreuzung der Schnittlinien durch eine gestrichelte Linie dargestellt ist,

Figur 5 a einen Schnitt durch den Zuführungskanal nach Fig. 5 b,

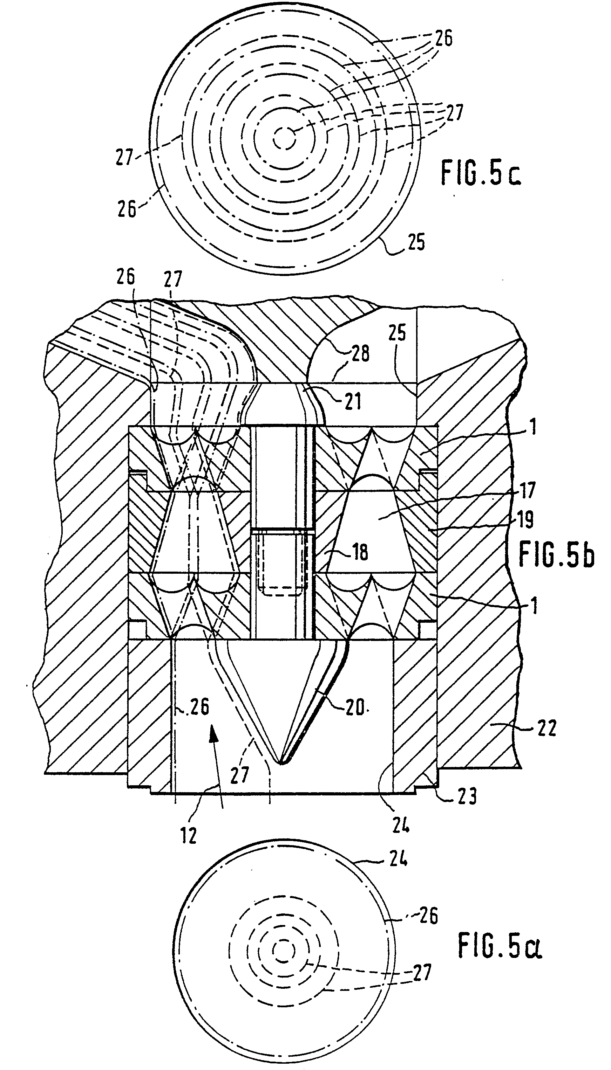

Figur 5 b einen Schnitt durch einen aus zwei Verteilerscheiben aufgebauten Verteilerblock,

Figur 5 c einen Schnitt durch den ableitenden Kanal stromabwärts hinter den Verteilerscheiben nach Fig. 5 b,

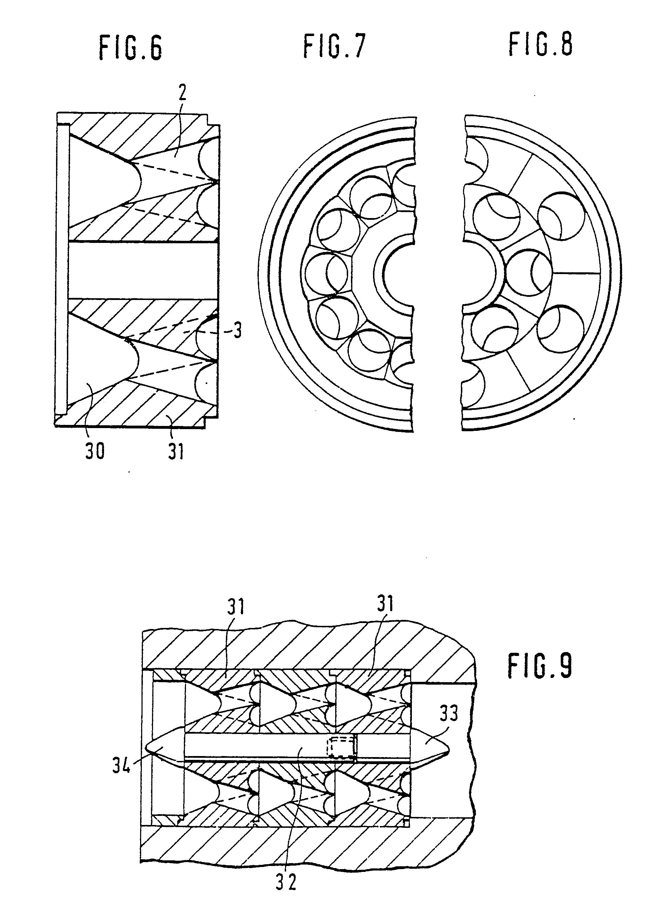

Figur 6 einen Längsschnitt durch eine radialsymmetrische Verteilerscheibe mit V-förmiger Einlaufnut,

Figuren 7 und 8 Ansichten der Verteilerscheiben nach Fig. 6 von der Anström- und Abströmseite her,

Figur 9 einen aus den Verteilerscheiben nach den Fig. 6-8 zusammengesetzten Verteilerblock,

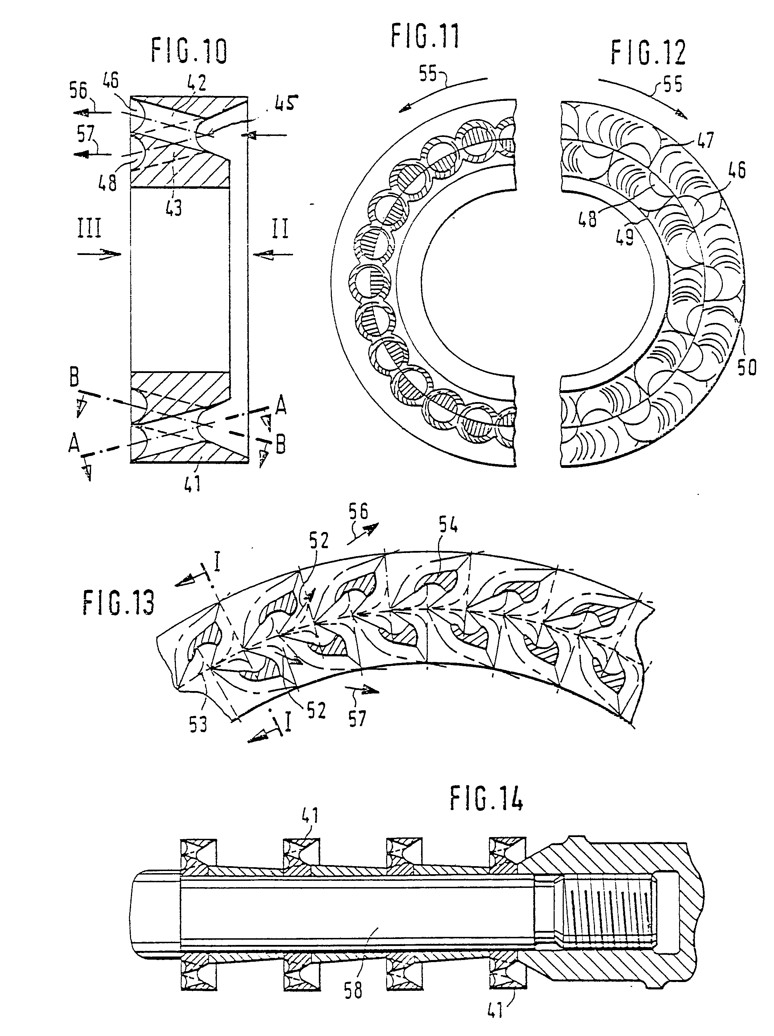

Figur 10 einen Längsschnitt durch eine auf den Schaft einer Förderschnecke aufgesetzte Verteilerscheibe,

Figuren 11 und 12 Ansichten der Verteilerscheibe nach Fig. 10 in Richtung der Pfeile II und III,

Figur 13 eine Doppelkegel-Schnittführung entlang den Schnittlinien AA und BB in Fig. 10, wobei die Kreuzung der Schnittlinien durch eine gestrichelte Linie dargestellt ist und

Figur 14 einen Längsschnitt durch einen aus vier Verteilerscheiben aufgebauten Verteilerblock, die auf einen den Schaft der Förderschnecke verlängernden Schaftteil aufgesetzt sind.

In die Verteilerscheibe 1 sind die Schmelze bzw. Schmelzestränge radial nach außen führende Kanäle 2 und radial nach innen leitende Kanäle 3 eingearbeitet. Beide Kanäle beginnen mit der Zuführungsbohrung 4, deren Mittelpunkte auf dem Halbmesser des Punktes 15' liegen und deren benachbarte Flächen zu den Fließschneiden 5 ausgebildet sind. Auf der Abströmseite enden die radial nach außen führenden Kanäle 2 in Öffnungen 6 mit den Fließschneiden 7 und die radial nach innen führenden Kanäle 3 in den Bohrungen 8 mit den dazwischenliegenden Fließschneiden 9. Der radiale Versatz beider Bohrungskreise ist so gewählt, daß sich zwischen beiden die Ringschneide 10 ergibt. Ausgehend von dem ringförmigen Zuführungskanal bzw. den ringförmigen Abströmkanälen sind somit toteckenfreie Fließschneiden 5, 7, 9 und 10 gebildet, so daß keine störenden Materialstauungen auftreten können.

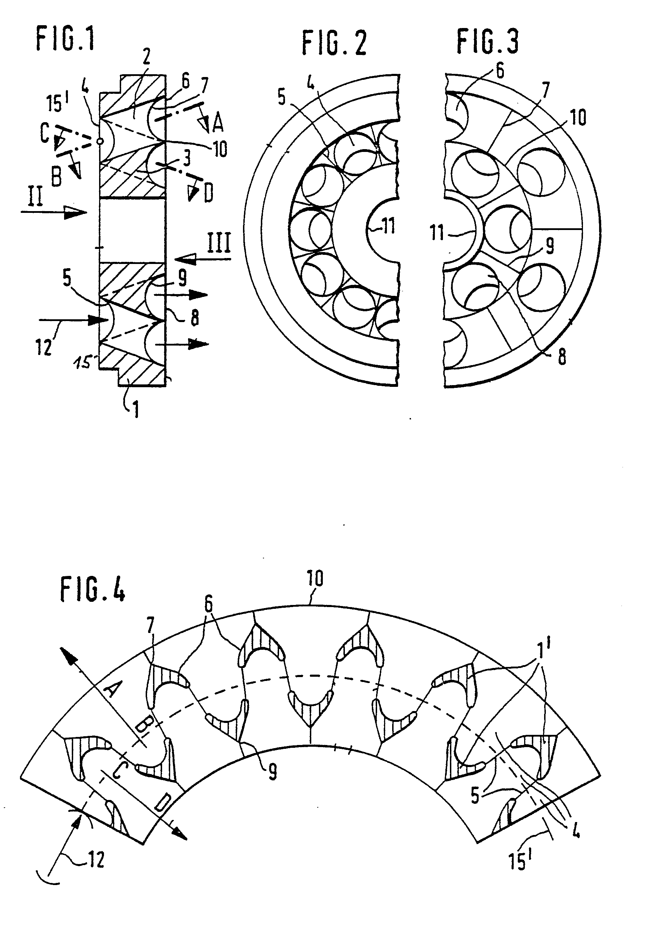

In Fig. 4 ist die Doppelkegelabwicklung entlang den Schnittlinien A-B und C-D dargestellt, wobei durch die « durchgestülpte » Darstellung der zufließende Schmelzestrom 12 durch den in Klammern gesetzten Pfeil angedeutet ist. Der zugeführte Schmelzestrom trifft auf die Zuführungsebene 15, in der etwa mittig die gestrichelte Linie liegt, deren Radius dem der Punkte 15' entspricht. In der Darstellung nach Fig. 4 sind die Abwicklungen entsprechend den Schnitten A-B und C-D um die gestrichelte Linie in die Ebene geklappt. Aus der Darstellung nach Fig. 4 ist zu erkennen, daß die verbindenden Wandungen 1' zwischen den Bohrungen bzw. den Fließschneiden 5, 7, 9 verhältnismäßig gering sind, so daß ein Maximum an Durchlaßquerschnitt erreicht ist. Die Zuführungsbohrungen 4 mit den Fließschneiden 5 werden, wie aus den Fig. 1 bis 3 ersichtlich ist, von der gestrichelten Linie in Fig. 4 geschnitten.

Ein zusammengesetzter Verteilerblock mit zwei Verteilerscheiben 1 wird nachstehend anhand der Fig. 5 erläutert. In dem schematisch angedeuteten Gehäuse 22 stützt sich der auf der Abströmseite angeordnete Verteilerring 1 auf einen ringförmigen Absatz ab. Zwischen den beiden Verteilerringen 1 sind zwei kegelige Hülsen 18, 19 angeordnet, die einen konvergierenden Ringkanal 17 begrenzen. Die Verteilerscheiben 1 und die kegeligen Verbindungshülsen 18, 19 werden durch miteinander verschraubte Bolzen, die durch zentrale Bohrungen der Verteilerscheiben und der inneren Hülse geführt sind, zusammengehalten, wobei der Bolzen auf der Anströmseite einen kegeligen Kopf 20 aufweist und auf der Abströmseite einen etwa kegelstumpfförmigen Kopf 21 aufweist, der die Abströmkanäle auf den inneren Seiten begrenzt. Auf der Zuströmseite wird der Verteilerblock durch eine in nicht dargestellter Weise mit dem Gehäuse verspannte Hülse 23 gehalten.

In dem Zuführungskanal 24 ist schematisch eine wandnahe Grenzschicht 26 strichpunktiert und das Gebiet mit der Temperaturspitze im Strangzentrum 27 gestrichelt dargestellt. Der Verlauf durch die erste Verteilerscheibe 1, den konvergierenden Kanal 17 und die zweite Verteilerscheibe 1 zeigt, daß die zunächst lokalen Fehler 26, 27 sich im ableitenden Kanal 25 konzentrisch überlagern und im geringen Abstand voneinander befinden. Der mit diesen Schichten verbundene Farbwechsel- bzw. Temperaturfehler kann sich daher nicht mehr störend bemerkbar machen.

Zur Entlastung der verhältnismäßig geringen Verbindungsquerschnitte 1' zwischen den Bohrungen der Verteilerscheiben 1 ist es zweckmäßig, abströmseitig den kegelstumpfförmigen Kopf 21 der Verbindungsbolzen gegen eine anschließende, den Schmelzestrom aufteilende Fließschneide 28 abzustützen.

Die Verteilerscheiben und der aus diesen aufgebaute Verteilerblock ergibt wegen der geringen Baulänge nur einen geringen Fließwiderstand. Handelsübliche Mischelemente weisen eine Baulänge von bis zu 4xD (D = Außendurchmesser des Mischelements) auf und vermögen mischtechnisch nicht zu befriedigen, obwohl die durch diese bedingte Drucksteigerung bis zu 100 bar betragen kann.

Die Herstellungskosten der Verteilerscheiben und des beschriebenen Verteilerblockes sind vergleichsweise gering. Das komplizierteste Teil bildet die Lochscheibe mit den Verlagerungsbohrungen und den eingearbeiteten Fließschneiden. Durch Kopierfräsen, NC-Fräsen oder Feinguß sind die auch bei Mehrfachanwendung identischen Verteilerscheiben 1 kostengünstig herzustellen. Alle übrigen Teile sind einfache Drehteile.

Die Verteilerscheiben bzw. der Verteilerblock werden vorteilhaft vor jeder Aufteilung des Schmelzekanals nach einer Strangpresse, beispielsweise einer einfachen Kanalgabelung mit Trenn-Fließschneide zur Schmelzeverteilung auf zwei oder mehr Spritzköpfe von Mehrkopfstrangpressen eingesetzt. Innerhalb des eigentlichen Spritzkopfes können die Verteilerscheiben bzw. der Verteilerblock verwendet werden, wenn fließtechnisch eine Schmelzestromverteilung erforderlich ist, beispielsweise bei Folienblasköpfen mit mehreren Verteilerwendeln.

Die Verteilerscheiben und Verteilerblöcke sind anhand von runden Fließkanälen als radialsymmetrische Elemente beschrieben worden. Sie können aber auch in entsprechender Abwandelung auf lange, breite Flackanäle geringer Kanalhöhe übertragen werden.

Die Verteilerscheiben und Verteilerblöcke sind gleichermaßen für diskontinuierlich arbeitende Verarbeitungsmaschinen für thermoplastische und elastomere Massen, wie beispielsweise Spritzguß- und Hohlkörper-Blasformmaschinen, verwendbar.

In den Fig. 6. 8 ist eine Verteilerscheibe dargestellt, die sich von der Verteilerscheibe nach den Fig. 1. 3 im wesentlichen nur dadurch unterscheidet, daß sie auf der Anströmseite mit einer V-förmigen Nut 30 versehen ist, von deren Grund die radial nach außen und radial nach innen führenden Kanäle 2, 3 ausgehen. Wie aus Fig. 9 ersichtlich ist, entspricht die äußere Breite der V-förmigen Nuten 30 der Breite der auf konzentrischen Ringbereichen mündenden Kanäle 2, 3, so daß die Verteilerscheiben 31 in der aus Fig. 9 ersichtlichen Weise unmittelbar zur Bildung eines Verteilerblockes hintereinander geschaltet werden können. Der aus den Verteilerscheiben 31 aufgebaute Block ist durch einen zentralen Bolzen 32 zusammengehalten, der an seinen Enden mit kegeligen Köpfen 33, 34 versehen ist, die die Strömung in ihrem Kernbereich teilen und wieder zusammenführen. Der Bolzen 32 ist in der aus Fig. 9 ersichtlichen Weise zweiteilig ausgeführt und miteinander verschraubt.

Anhand der Fig. 10-14 werden nun auf dem Schaft der Förderschnecke einer Strangpresse befestigte ringförmige Verteilerscheiben 41 näher erläutert. In die Verteilerscheibe 41 sind die Schmelze bzw. Schmelzestränge radial nach außen führenden Kanäle 42 und radial nach innen führenden Kanäle 43 eingearbeitet. Beide Kanäle sind durch Bohrungen gebildet, deren Mittellinien sich in dem Punkt 45 schneiden. Auf der Abströmseite enden die radial nach außen führenden Kanäle 42 in Öffnungen 46 mit den gekrümmten Fließschneiden 47 und die radial nach innen führenden Kanäle 43 in den Öffnungen 48 mit den dazwischenliegenden gekrümmten Fließschneiden 49. Der radiale Versatz beider Bohrungskreise ist so gewählt, daß sich zwischen beiden die Ringschneide 50 ergibt. Ausgehend von dem ringförmigen Zuführungskanal, bzw. den ringförmigen Abströmkanälen sind somit toteckenfreie Fließschneiden 47, 49 und 50 gebildet, so daß keine störenden Materialstauungen auftreten können.

Die Kanäle 42, 43 sind in Fließrichtung des Schmelzestroms schräg verlaufend angeordnet, was jedoch aus Gründen einer vereinfachten zeichnerischen Darstellung nicht gezeichnet worden ist.

In Fig. 13 ist die Doppelkegelabwicklung entlang den Schnittlinien A-A und B-B gezeigt, wobei durch die « durchgestülpte » Darstellung der zufließende Schmelzestrom 52 durch Pfeile angedeutet ist. Der zugeführte Schmelzestrom trifft auf die Zuführungsebene, in der etwa mittig die gestrichelte Linie 53 liegt, auf der auch die Punkte 45 (Fig. 10) liegen. In der Darstellung nach Fig. 13 sind die Abwicklungen entsprechend den Schnitten A-A und B-B um die gestrichelte Linie 53 in die Ebene geklappt worden. Aus der Darstellung nach Fig. 13 ist zu erkennen, daß die verbindenden Wandungen 54 zwischen den Bohrungen bzw. den Fließschneiden 47, 49 verhältnismäßig dünn sind, so daß ein Maximum an Durchlaßquerschnitt erreicht wird. Die Ränder der die Kanäle 42, 43 bildenden Bohrungen mit den Fließschneiden 5 werden auf der Anströmseite, wie aus den Fig. 10. 12 ersichtlich ist, von der gestrichelten Linie 53 in Fig. 13 geschnitten.

Die Drehrichtung der Schnecke ist durch den Pfeil 55 angedeutet. Während der Pfeil 52 die Schmelzezuströmung andeutet, zeigt der Pfeil 56 den in die äußere Mantelebene geleiteten Schmelzestrom und der Pfeil 57 den in die innere Mantelebene geleiteten Schmelzestrom. Wie aus den Fig. 11. 13 ersichtlich ist, sind die Kanäle 42, 43 spiralig in Richtung der Schmelzeströmung geneigt angeordnet.

Ein zusammengesetzter Verteilerblock mit vier auf dem Schneckenschaft 58 angeordneten Verteilerscheiben 41 ist aus Fig. 14 ersichtlich.

## Patentansprüche

1. Verfahren zur Bildung und Umschichtung von Teilströmen von aus bzw. in einer Strangpresse geförderten thermoplastischen und/oder elastomeren Massen, bei dem der Schmelzestrom in sektorartige Teilströme aufgeteilt und diese in relativ zueinander versetzter Form wieder zusammengeführt werden, dadurch gekennzeichnet, daß der gesamte Schmelzestrom durch auf einer gemeinsamen umlaufenden ringförmigen Linie angeordnete Einlauföffnungen in nebeneinanderliegende sektorartige Teilströme aufgeteilt wird, deren äußere Seite jeweils durch die in Streifen aufgeteilte Grenzschicht des Schmelzestroms gebildet ist, und daß die Teilströme abwechselnd radial nach innen und nach außen geleitet werden und sich in zwei konzentrischen Ringbereichen wieder vereinigen.

2. Verfahren nach Anspruch 1, dadurch gekennzeichnet, daß der Schmelzestrom mehrmals aufgeteilt wird und die Teilströme wieder vereinigt werden.

3. Vorrichtung bestehend aus wenigstens einer ringförmigen Verteilerscheibe (1) zur Durchführung des Verfahrens nach Anspruch 1, mit winkelig zueinander verlaufenden und den Schmelzestrom in Teilströme aufteilenden und diese in relativ zueinander versetzter Form wieder zusammenführenden, abwechselnd radial nach außen und innen verlaufenden Kanälen (2, 3), dadurch gekennzeichnet, daß die ringförmige Verteilerscheibe (1) auf ihrer Anströmseite auf einer gemeinsamen umlaufenden ringförmigen Linie die Einlaßöffnungen (4) für die abwechselnd radial nach außen und nach innen verlaufenden Kanäle (2, 3) aufweist.

4. Vorrichtung nach Anspruch 3 zur Durchführung des Verfahrens nach Anspruch 2, dadurch gekennzeichnet, daß ein mindestens zwei ringförmige Verteilerscheiben (1) enthaltender Verteilerblock vorgesehen ist und daß zwischen jeweils zwei Scheiben (1) ein ringförmiger Kanal (17) gebildet ist, dessen Einlaufspaltbreite der Breite des durch die auf etwa konzentrischen Ringen angeordneten Öffnungen der Kanäle (2, 3) auf der Abströmseite der ersten Verteilerscheibe (1) definierten ringförmigen Bereiches entspricht und der sich konvergierend auf eine Breite verengt, die der Breite des durch die Öffnungen der Bohrungen auf der Anströmseite der zweiten Verteilerscheibe (1) bestimmten ringförmigen Bereiches angepaßt ist.

5. Vorrichtung nach Anspruch 3 oder 4, dadurch gekennzeichnet, daß jeder Einlauf- und Auslauföffnung der Kanäle (2, 3) sich trichterförmig verengende, bzw. erweiternde Bereiche zugeordnet sind, die durch in Fließschneiden (5, 7, 9, 10) auslaufende steg- oder wulstförmige Zwischenwandteile von angrenzenden Bereichen getrennt sind.

6. Vorrichtung nach Anspruch 3, dadurch gekennzeichnet, daß die Verteilerscheibe (31) auf ihrer Anströmseite eine zu ihrer Achse konzentrische, im Querschnitt V-förmige Ringnut (30) aufweist, von deren Grund die abwechselnd radial nach außen und radial nach innen verlaufenden Kanäle (2, 3) ausgehen, die auf der Abströmseite auf zueinander konzentrischen Ringbereichen der Verteilerscheibe münden.

7. Vorrichtung nach Anspruch 6, dadurch gekennzeichnet, daß der äußere Durchmesser der V-förmigen Nut (30) der Breite der Ringbereiche entspricht, in denen die Kanäle (2, 3) auf der Abströmseite münden.

8. Vorrichtung nach einem der Ansprüche 3 bis 7, dadurch gekennzeichnet, daß die Verteilerscheibe auf der Anströmseite mit einem zentralen Verteilerkegel (20, 34) versehen ist, dessen Basis im Randbereich der Einlauföffnungen (4) oder der V-förmigen Nut (30) liegt.

9. Vorrichtung nach einem der Ansprüche 3 bis 5, dadurch gekennzeichnet, daß die Verteilerscheibe (1) in dem Schmelzekanal zwischen einer Strangpresse und dem ausformenden Spritzwerkzeug unmittelbar vor eine Schmelzekanalverzweigung angeordnet ist.

10. Vorrichtung nach einem der Ansprüche 3 bis 5 oder 9, dadurch gekennzeichnet, daß die Verteilerscheibe (1) bei Mehrspritzkopf-Extruderanlagen unmittelbar vor der Fließkanalgabelung angeordnet ist.

11. Vorrichtung nach einem der Ansprüche 3 bis 5 oder 9 oder 10, dadurch gekennzeichnet, daß die Verteilerscheibe (1) innerhalb eines Spritzkopfes am Ende der radialsymmetrischen Zuführungsbohrung vor der folgenden Kanalverzweigung bzw. der endgültigen Schmelzeaufteilung in dem ausformenden Düsenspalt derart angeordnet ist, daß sie sich über einen sie abströmseitig stützenden, mit einem Kopf (21) versehenen Bolzen auf Fließschneiden (28) angrenzender Verteilungskanäle abstützt.

12. Vorrichtung zur Durchführung des Verfahrens nach Anspruch 1 mit einer auf dem Schaft der Förderschnecke der Strangpresse befestigten ringförmigen Verteilerscheibe (41) mit winkelig zueinander verlaufenden und den Schmelzestrom in Teilströme aufteilenden und diese in relativ zueinander versetzter Form wieder zusammenführenden, abwechselnd nach außen und innen verlaufenden Känälen (42, 43), dadurch gekennzeichnet, daß die Verteilerscheibe (41) auf der Anströmseite auf einer gemeinsamen umlaufenden ringförmigen Linie (53) mit Einlaßöffnungen für die abwechselnd radial nach außen und nach innen verlaufen Kanäle (42, 43) versehen ist.

13. Vorrichtung nach Anspruch 12 zur Durchführung des Verfahrens nach Anspruch 2, dadurch gekennzeichnet, daß zwischen jeweils zwei auf dem Schaft der Förderschnecke angeordneten ringförmigen Verteilerscheiben (41) konusförmige Distanzringe angeordnet sind, deren Enden mit geringerem Durchmesser an den inneren Randbereich der radial inneren Abströmbohrungen und deren Enden mit größeren Durchmesser an den inneren Randbereich der Einlauföffnungen anschließen.

14. Vorrichtung nach einem der Ansprüche 12 oder 13, dadurch gekennzeichnet, daß die Kanäle (42, 43) in Umfangsrichtung der Verteilerscheibe (41) entsprechend der spiralförmigen Fließrichtung des Schmelzestroms schräg verlaufend ausgebildet sind.

**Claims**

1. A process of forming and rearranging partial streams consisting of thermoplastic and/or elastomeric compositions being fed in an extruder, wherein the molten stream is divided into sectorlike partial streams and the latter are recombined in a relatively offset arrangement, characterized in that the entire molten stream is divided into juxtaposed sectorlike partial streams by inlet openings disposed on a common peripheral annular line, the outer side of each of said partial streams is defined by the boundary layer of the molten stream, which boundary layer is divided into strips, and the partial streams are directed in radially inward and outward directions in alternation and are recombined in two concentric annular zones.

2. A process according to claim 1, characterized in that the molten stream is repeatedly divided and the partial streams are recombined.

3. Apparatus consisting of at least one annular distributor disc (1) for carrying out the process according to claim 1, comprising passages (2, 3) which extend radially outwardly and inwardly in alternation and an angle to each other and divide the molten stream into partial streams and recombine the latter in a radially offset arrangement, characterized in that the annular distributor disc (1) is provided on its influent side on a common peripheral annular line with the inlet openings (4) for the passages (2, 3) which are directed radially outwardly and inwardly in alternation.

4. Apparatus according to claim 3 for carrying out the process according to claim 2, characterized in that a distributor block is provided, which comprises at least two annular distributing discs (1), and an annular passage (17) is defined between any two adjacent discs (1) and has an inlet gap having a width which corresponds to the width to the annular zone which is defined on the effluent side of the first distributor disc (1) by the openings of the passages (2, 3), which openings are disposed in approximately concentric rings, and said passages converges to a width which is adapted to the width of the annular zone which is defined by the openings of the bore on the influent side of the second distributor disc (1).

5. Apparatus according to claim 3 or 4, characterized in that funnel-shaped tapering and flaring portions are associated with each inlet and outlet opening of the passages (2, 3) and are separated from adjoining portions by web- or beadlike partition portions, which terminate in flow-dividing edges (5, 7, 9, 10).

6. Apparatus according to claim 3, characterized in that the distributor disc (31) is provided on its influent side with an annular groove (30), which is V-shaped in cross-section and centred on the axis of the disc, and the passages (2, 3) which extend radially outwardly and inwardly in alternation extend from the bottom of said groove and on the effluent side open in concentric annular portions of the distributor disc.

7. Apparatus according to claim 6, characterized in that the outside diameter of the V-shaped groove (30) is equal to the width of the annular zones in which the passages (2, 3) open on the effluent side.

8. Apparatus according to any of claims 3 to 7, characterized in that the distributor disc is provided on the influent side with a central distributing cone (20, 34), which has a base disposed adjacent to the edge portion of the inlet openings (4) or of the V-shaped groove (30).

9. Apparatus according to any of claims 3 to 5, characterized in that the distributor disc (1) is disposed in the passage for conducting molten material from an extruder to the extrusion die and closely precedes a junction of the passages for conducting the molten material.

10. Apparatus according to any of claims 3 to 5 or 9, characterized in that in extruder plants comprising a plurality of die heads the distributor disc (1) closely precedes the junction of the passage for conducting the molten material.

11. Apparatus according to any of claims 3 to 5 or 9, or 10, characterized in that the distributor disc (1) is disposed within a die head at the end of the radially symmetrical supply bore before the downstream passage junction or before the final division of the molten material to be delivered to the die orifice and is arranged in such a manner that the distributor disc is supported on its effluent side on flow-dividing edges (28) of adjoining distributing passages by means of a bolt which is provided with a head (21).

12. Apparatus for carrying out the process according to claim 1, comprising an annular distributor disc (41), which is secured to the shaft of the feed screw of the extruder and provided with passages (42, 43), which extend outwardly and inwardly in alternation and at an angle to each other and divide the molten stream into partial streams and recombine the latter in an offset arrangement, characterized in that the distributor disc (41) is provided on its influent side on a common peripheral annular line (53) with inlet openings for the passages (42, 43), which extend radially outwardly and inwardly in alternation.

13. Apparatus according to claim 12 for carrying out the process according to claim 2, characterized in that conical spacer rings are provided between any two annular distributor discs (41) mounted on the shaft of the feed screw, those ends of said rings which are smaller in diameter adjoin the inner edge portion of the radially inner outlet bores, and those ends of said rings which are larger in diameter adjoin the inner edge portion of the inlet openings.

14. Apparatus according to claim 12 or 13, characterized in that the passages (42, 43) extend obliquely in the peripheral direction of the distributor disc (41) in accordance with the spiral flow of the stream of molten material.

## Revendications

1. Procédé pour former et regrouper des flux partiels de masse thermoplastique et/ou élastomères refoulés par une extrudeuse, dans lequel le flux fondu est divisé en flux partiels à la manière de secteurs, qui sont réunis à nouveau en disposition décalée les uns par rapport aux autres, caractérisé en ce que le flux fondu entier est divisé en flux partiels juxtaposés à la manière de secteurs par des ouvertures d'entrée disposées sur une ligne annulaire périphérique commune, la partie extérieure de chacun des flux partiels étant définie par une couche limite du flux fondu qui est divisée en bandes, et que les flux partiels sont dirigés en alternance en direction radiale vers l'intérieur et vers l'extérieur et se réunissent à nouveau en deux zones annulaires concentriques.

2. Procédé selon la revendication 1, caractérisé en ce que le flux fondu est divisé à plusieurs reprises et que les flux partiels sont réunis à nouveau.

3. Dispositif consistant en au moins un disque distributeur (1) annulaire pour l'exécution du procédé selon la revendication 1, comportant des passages (2, 3) qui s'étendent en direction radiale vers l'extérieur et vers l'intérieur en alternance et à un angle les uns par rapport aux autres et divisent le flux fondu en flux partiaux, réunissant ces derniers de nouveau en disposition décalée, caractérisé en ce que le disque distributeur annulaire (1) comporte sur le côté admission du flux des ouvertures (4) disposées sur une ligne périphérique annulaire commune pour les passages (2, 3) qui sont dirigés en alternance en direction radiale vers l'extérieur et vers l'intérieur.

4. Dispositif selon la revendication 3 pour l'exécution du procédé selon la revendication 2, caractérisé en ce qu'un bloc distributeur est prévu qui comporte au moins deux disques (1) distributeurs annulaires et qu'un passage annulaire (17) est formé entre chaque fois deux disques adjacents (1) ayant une fente d'admission qui a une largeur qui correspond à la largeur de la zone annulaire qui est définie du côté de l'écoulement du premier disque distributeur (1) par les ouvertures du passage (2, 3), ouvertures qui sont disposées sur des anneaux qui sont approximativement concentriques, ledit passage convergeant jusqu'à une largeur qui est adaptée à la largeur de la zone annulaire qui est définie par les ouvertures de l'alésage sur le côté admission du deuxième disque de distribution (1).

5. Dispositif selon la revendication 3 ou 4, caractérisé en ce que les parties se rétrécissant à la manière d'un entonnoir et s'évasant sont associées à chaque ouverture d'admission et d'écoulement des passages (2, 3) et sont séparées des parties voisines par des séparations intermédiaires en forme de traverses ou de bourrelets qui débouchent dans les arrêtes (5, 7, 9, 10) divisant le flux.

6. Dispositif selon la revendication 3, caractérisé en ce que le disque distributeur (31) est pourvu du côté admission d'une rainure annulaire (30) qui a une coupe transversale en forme de V et est centrée sur l'axe du disque et que les passages (2, 3) qui s'étendent en direction radiale vers l'extérieur et vers l'intérieur en alternance partent du fond de la rainure et débouchent du côté écoulement dans des zones annulaires concentriques du disque distributeur.

7. Dispositif selon la revendication 6, caractérisé en ce que le diamètre extérieur de la rainure en forme de V (30) est égal à la largeur des zones annulaires dans lesquelles les passages (2, 3) débouchent du côté écoulement.

8. Dispositif selon l'une quelconque des revendications 3 à 7, caractérisé en ce que le disque distributeur est pourvu du côté admission d'un cône de distribution central (20, 34) dont la base est située dans la zone des bords des ouvertures d'admission (4) ou de la rainure en forme de V.

9. Dispositif selon l'une quelconque des revendications 3 à 5, caractérisé en ce que le disque distributeur (1) est disposé dans le passage acheminant le matériel fondu d'une extrudeuse vers la filière et se trouve immédiatement en amont d'une bifurcation du passage transportant le matériel fondu.

10. Dispositif selon l'une quelconque des revendications 3 à 5 ou 9, caractérisé en ce que dans des installations d'extrusion comportant une pluralité de filières, le disque distributeur (1) est disposé immédiatement en amont de la bifurcation du passage pour transporter le matériel fondu.

11. Dispositif selon l'une quelconque des revendications 3 à 5 ou 9 ou 10, caractérisé en ce que le disque distributeur (1) est disposé dans une filière à l'extrémité de l'alésage d'admission à symétrie radiale en amont de la bifurcation de passage suivante ou de la division finale de la matière fondue qui doit être fournie à l'orifice de la filière et est disposée de manière à ce que le disque distributeur s'appuie du côté écoulement sur des arêtes (28) divisant le flux de passages distributeurs adjacents au moyen d'un boulon qui est pourvu d'une tête (21).

12. Dispositif pour exécuter le procédé selon la revendication 1, comportant un disque distributeur annulaire (41) qui est fixé à la tige de la vis transporteuse d'une extrudeuse et est pourvu de passages (42, 43) qui s'étendent vers l'extérieur et vers l'intérieur en alternance et à un angle les uns par rapport aux autres et divisent le flux fondu en flux partiaux et réunissent ces derniers en disposition décalée, caractérisé en ce que le disque distributeur (41) est pourvu du côté admission sur une ligne (53) annulaire périphérique commune d'ouvertures d'admission pour les passages (42, 43) qui s'étendent en direction radiale vers l'extérieur et vers l'intérieur en alternance.

13. Dispositif selon la revendication 12 pour exécuter le procédé selon la revendication 2, caractérisé en ce que des anneaux d'espacement coniques sont disposés entre les deux disques distributeurs annulaires (41) montés sur la tige de la vis transporteuse, les extrémités desdits anneaux d'espacement qui ont un diamètre plus petit étant adjacents à la partie du bord intérieur des alésages d'écoulement intérieurs dans le sens radial et les extrémités desdits anneaux d'espacement qui ont un diamètre plus important étant adjacents à la partie du bord intérieur des ouvertures d'admission.

14. Dispositif selon la revendication 12 ou 13, caractérisé en ce que les passages (42, 43) s'étendent obliquement en direction périphérique du disque distributeur (41) en correspondance avec l'écoulement en spirale du flux de matière fondue.

FIG.1

FIG.2

FIG.3

FIG.4

FIG.5c

FIG.5b

FIG.5a

FIG.6 FIG.7 FIG.8

FIG.9

**FIG.10**

**FIG.11**

**FIG.12**

**FIG.13**

**FIG.14**